Europäisches Patentamt

European Patent Office

Office européen des brevets

(19)

(11) EP 1 139 276 A1

(12) EUROPEAN PATENT APPLICATION

(43) Date of publication:
04.10.2001 Bulletin 2001/40

(51) Int Cl.7: G06K 15/02

(21) Application number: 01400762.9

(22) Date of filing: 23.03.2001

(84) Designated Contracting States:
AT BE CH CY DE DK ES FI FR GB GR IE IT LI LU
MC NL PT SE TR
Designated Extension States:
AL LT LV MK RO SI

(30) Priority: 29.03.2000 FR 0003968

(71) Applicant: Canon Research Centre France S.A.
35517 Cesson-Sevigne Cedex (FR)

(72) Inventors:
• Moreau, Jean-Jacques
  35000 Rennes (FR)
• Amarger, Stéphane
  92370 Chaville (FR)

(74) Representative: Rinuy, Santarelli
14, avenue de la Grande Armée,
B.P. 237
75822 Paris Cédex 17 (FR)

(54) **Method and device for processing a document available in the form of a set of digital data**

(57)     Processing of digital data representing a document in order to represent parts of this document according to one or other of two possible resolutions.

From a set of digital data, a first series of data (8, 9) is produced in which digital data in one category are masked and a second series of data (8', 9') in which digital data in another category are masked, and these two series, corresponding notably to different resolutions, are used.

Fig.5

EP 1 139 276 A1

**Description**

The invention relates to a method of processing a document available in the form of a set of digital data representing, for example, graphical instructions, known per se.

It concerns more particularly a division of this information for extracting therefrom at least two series of distinct data with a view to subsequent differentiated uses.

The invention applies notably to the processing of the digital data with a view to their printing, for example in a printer, but also a processing of digital data resulting from a scanning of a document, with a view to their subsequent transmission and/or printing.

One of the aims of the invention is to make it possible to produce at least two series of digital data adapted to the subsequent representation of the document, notably its printing, in at least two different resolutions, the choice of the resolution being dictated by the composition of the document itself. This is because a document may require, for certain areas, a very detailed so-called "high-resolution" representation (complex image parts) or for other areas a coarser so-called "low-resolution" representation, such as for example the representation of printing characters or simple geometric shapes.

A computer printer contains at least one and generally several print heads. Each head is responsible for ejecting at least one printing product of a particular colour. For example, the print head of a black and white inkjet printer controls the ejection of droplets of black ink. For a colour printer, other print heads control the ejection of inks of different colours, notably cyan, magenta and yellow. Combining these various print products makes it possible to obtain a broad palette of colours.

The ejection proper is effected by bringing a predetermined quantity of printing product, from a reservoir, into a chamber, and ejecting the product via a print nozzle according to a known principle.

After ejection, the printing product strikes the print medium, for example a sheet of paper, where a dot, or pixel, forms. The letters, graphics and images to be printed are formed from a succession of dots in an appropriate order.

More precisely, a computer document is converted, before printing, into one or more arrays of pixels, the array or arrays of pixels describing a monochromatic component of the document. Each pixel in such an array corresponds uniquely to a point on the sheet of paper to be printed. A predetermined quantity of printing product will therefore be ejected at a point only when the value of the corresponding pixel is equal to 1 (the pixel will be said to be "switched on" in this case). In order to allow a uniform rendering of the document, it will be understood that the pixels are evenly spaced apart, in width and height. For example, for an inkjet printer of 720 x 720 dpi (dots per inch), the horizontal pitch and the vertical pitch are 1/720th of an inch, that is to say approximately 35 μm.

In this "ideal" print mode, a document, after conversion into one or more arrays of pixels, is printed several lines simultaneously. In practice, as many lines as there are nozzles in the print head or heads are printed simultaneously. For example, in the case of a black and white inkjet printer, having a single print head of 128 nozzles, a single array of pixels is created. The array is run through from left to right during a first pass and, the print head itself moving from left to right, the switched-on pixels in lines 1 to 128 are printed. The head is then moved downwards by 128 pixels or, which is equivalent, the paper is moved upwards by 128 pixels. A second pass is then carried out in order to print lines 129 to 256, the head this time moving from right to left. At the end of this pass, the paper is once again advanced by 128 pixels, and then the printing and advancing steps are reiterated until the entire document has been printed.

The printing of a document in this ideal mode does however present a certain number of drawbacks, notably a diffusion effect which is a particular nuisance. Diffusion effect means a phenomenon which occurs when two adjacent pixels are printed at the same time: the ink diffuses, the two pixels join up and, instead of two quite distinct dots, a spot with irregular shapes forms.

One particularly effective technique for combating this effect consists of duplicating each pass, and printing only one line out of two each time. Thus the pixels in the first pass have time to dry before their neighbours are printed in their turn.

This duplication is particularly effective for preventing diffusion in the direction perpendicular to the direction of movement of the head. For the pixels in the same "line" a lesser resolution can be tolerated, resulting in a greater spacing of the pixels.

Although very advantageous, this high-resolution print method considerably increases the time required for printing. It is therefore reserved for the printing of particularly demanding documents.

For ordinary documents, the printers of the state of the art have available another print mode, known as low resolution, which consists of printing only one pixel out of two. The size of the pixels remaining unchanged, this does not have any visible effect on printing.

More precisely, in this mode, the document to be printed is converted into one or more arrays of pixels with a resolution lower than that of the printer. For example, for a single-head black and white inkjet printer supporting a maximum resolution of 720 x 720 dpi, an array of pixels is generated at half-resolution, that is to say 360 x 360 dpi. This array is then printed with a double horizontal pitch, that is to say 2/720th of an inch (approximately 70 μm). In addition, the spacing between the nozzles being fixed, only one nozzle out of two is used, which amounts to doubling the vertical pitch.

In practice, many documents contain at the same time elements which could be printed without detriment in low-resolution mode, text in particular, that is to say printing characters, and others for which this reproduction mode is not suited, notably images.

The invention makes it possible to process the information constituting the document available in the form of digital data in order to make it possible, in this example, to print these two types of element in different ways. The basic principle of the invention consists of generating two sets of digital data before they are converted into arrays of pixels (an operation known as "rasterisation") in order to separate, in a useable fashion, the information (corresponding to parts of documents) having to be reproduced in high resolution and those for which a low-resolution reproduction is sufficient.

More particularly, the invention concerns a method of processing a document available in the form of a set of digital data in first and second categories, characterised in that it consists of producing a first series of digital data from data in said set by masking the digital data in the second category, producing a second series of digital data from data in said set by masking the digital data in the first category and using at least one of these two series.

The invention as defined above can find applications in very different fields provided that computer data describing a document are available. One of the favoured fields is, naturally, that of printing a document and more particularly when the digital data in question represent graphical instructions.

This is because, in a modern computer system, it is known, for example, that a document can be described by digital information known as "graphical instructions" of the "draw a line", "draw an ellipse" or "represent a bitmap image" type. These graphical instructions managed in a known operating system (known as "Windows") result from converting an original document to be printed by a print processor, also responsible for controlling a printer driver. The classification of the digital data, in this case here in the form of graphical instructions in the aforementioned first or second category, can therefore be carried out by considering the succession of graphical instructions in the course of a prior step of analysing all the digital data. Certain graphical instructions will automatically be classified in the first category, other graphical instructions will automatically be classified in the second category. Information corresponding to a low-resolution mode will be grouped together in the first series and information corresponding to a high-resolution mode will be grouped together in the second series. If necessary, graphical instructions corresponding normally to a low-resolution mode can nevertheless be classified in the second series, if this graphical instruction represents a detail which would be excessively degraded by a representation in low resolution.

According to another aspect of the invention, the analysis step mentioned above, when it relates to the analysis of graphical instructions, includes the search for closed graphical functions (circles, ellipses, etc), open graphical functions (straight lines, curves, etc), functions representing texts (alphanumeric characters) and functions representing images in bitmap mode. The functions representing text are, allowing for exceptions, automatically classified in said first category whilst the functions representing images in bitmap mode are, allowing for exceptions, classified in the second category. The closed or open graphical functions will be classified in one or other category according to other criteria, for example the dimensions of the figures which they represent in said document. If these dimensions are small, the second category (high definition) will be chosen, whereas on the other hand if these figures occupy a large amount of space in the document, they can merely be classified in said first category for a low-resolution representation.

Another application of the principle of the invention concerns the scanning of a document. In this case, the document is first of all described by an entire representation in bitmap mode. Then the scanning is followed by a conversion, applying known algorithms, for transcribing the document in a succession of aforementioned graphical instructions. Once this conversion has been carried out, the same process of analysing the graphical instructions can be applied for classifying them in the first or second category, from which it is then possible to produce the two series of digital data, in the form of graphical instructions, some of which are modified in order to be masked.

According to another important aspect of the invention, an operation of masking a graphical instruction in one or other series consists of rewriting this graphical instruction by modifying at least one colorimetric parameter thereof so as to allocate a colourless or, more generally, neutral representation to said graphical instruction.

In the case of a printing of the document, the aforementioned use then consists of printing the graphical instructions in the first series in low-resolution mode and/or printing the graphical instructions in the second series in high-resolution mode. To do this, it is possible to create, from graphical instructions in the two categories, two arrays describing respectively at least the same part of a monochromatic component of said document (an operation known as "rasterisation"), each cell in a array representing a pixel.

A pixel is said to be "switched on" when printing is provided at the location designated by the corresponding cell in the array. One of the arrays produced from graphical instructions in the first category contains the switched-on pixels to be reproduced in low resolution, and the other array, produced from the graphical instructions in the second category, contains the switched-on pixels to be reproduced in high resolution.

Each line in the document is then printed using the same print head, using the information from the two arrays, relating to said line. The same process is renewed for all the monochromatic components of the document.

To print a line, a relative movement is caused between the print head and a print medium (usually, the head moves along the line, whilst the print medium remains fixed) using two different speeds. A high speed is used when the pixels to be reproduced are read in the low-resolution array and a low speed when the pixels to be reproduced are read in the high-resolution array.

In addition, in a known fashion, in order to avoid the monochromatic component or components of the computer document occupying excessive space in the memory of the computer, the document is "divided" into adjacent bands, and each band is converted in turn into one or more arrays of pixels, the or each array of pixels describing a monochromatic component of the band currently being processed. This technique considerably reduces the memory necessary for converting a page of a document into one or more arrays of pixels, since at any time only the data necessary for the conversion of a small part of a document are kept in memory.

In order to apply corrections desirable for printing to the digital data represented in the form of pixels, by the use of known correction algorithms, in general use is made of bands slightly overlapping, by one or more pixels, and referred to in the remainder of the description as broadened bands. The effects to be corrected include notably the appearance of streaks which are particularly visible when extensive surfaces of uniform colour are printed. Thus, from the digital data in the document corresponding to broadened bands, at least one array of switched-on pixels is created, and referred to hereinafter as an enlarged array. In consequence, the enlarged array or arrays are modified by applying the known correction algorithm, and there is excluded from the printing the pixels corresponding to the excess part of the enlarged array or arrays, that is to say the overlapping part of the broadened bands, a part which will in any event be printed when the following broadened band is processed.

In the case of a colour printing, as many enlarged arrays are created as there are colours available, each one describing a monochromatic component of a broadened band of the document. A correction algorithm is applied in a manner known per se to each enlarged array before carrying out the simultaneous printing of the array or arrays. This is because colour inkjet printers allow the simultaneous use of various print heads, and therefore the printing of pixels of different colours during the same pass.

The invention also concerns a device for processing a document available in the form of a set of digital data in first and second categories, characterised in that it comprises first means for producing, from said set of data, a first series of digital data, including means for masking in said set the digital data in the second category and second means for producing, from said set of data, a second series of digital data, including means for masking in said set the digital data in the first category, and means for using at least one of these two series.

According to another advantageous characteristic of the invention, the device is characterised in that, said digital data being available in the form of graphical instructions, said means for masking graphical instructions in one or other category include means for rewriting such a graphical instruction by modifying at least one colorimetric parameter thereof, so as to allocate a colourless or neutral representation to it.

By way of example, the following graphical instruction can be considered:

$$\text{EMR - angle arc } (x, y, r, \alpha_1, \alpha_2, c, m, j, k)$$

This instruction designates an arc of a circle of centre (x, y) and of radius r lying between the angles $\alpha_1$ and $\alpha_2$, and its colorimetric characteristics are defined by the values of the parameters c, m, j and k. In this case, the masking operation consists of rewriting the same graphical instruction by reducing each parameter c, m, j and k to zero.

In the case of a printer, the device naturally has low-resolution printing means controlled from graphical instructions in the first series and high-resolution printing means controlled from graphical instructions in the second series.

If on the other hand it is a case of reprocessing the information delivered by a scanner, the device is of course associated with means of scanning a document. These are connected to conversion means, for transcribing the scanning into a succession of graphical instructions, by applying known algorithms. In this case, the scanning means are preferably of the high-resolution type, which makes it possible to effect only one "sweep" of the document to be stored in order then to extract, from this high-resolution information, that which is necessary for producing graphical instructions of the type indicated above, with a view to classification in one or other category.

The invention will be better understood and other advantages thereof will emerge more clearly in the light of the following description, given solely by way of example and made with reference to the accompanying drawings, in which:

- Figure 1 is a block diagram of a computer-printer set, implementing the invention;
- Figure 2 is a block diagram of a printer;
- Figure 3 is a perspective view of the colour printer with its print reservoirs associated with respective print heads;
- Figure 4 is a perspective view, to a larger scale, of a print head of the colour printer with an enlargement illustrating more particularly the printing liquid ejection nozzles;

- Figure 5 is a block diagram of the means specific to the implementation of the invention for producing data necessary for the printing of a document stored in the form of digital data, notably graphical instructions;

- Figure 6 is a flow diagram describing the implementation of the processing process;

- Figure 7 is a flow diagram detailing the step of printing in mixed mode, high resolution/low resolution, after implementation of the processing according to Figure 6;

- Figure 8 is a flow diagram illustrating the changes in speed applied to the means of moving the print head;

- Figure 9 is a flow diagram illustrating the analysis of the graphical instructions; and

- Figure 10 is a block diagram of the means specific to the implementation of the invention for processing the data issuing from a document scanning device.

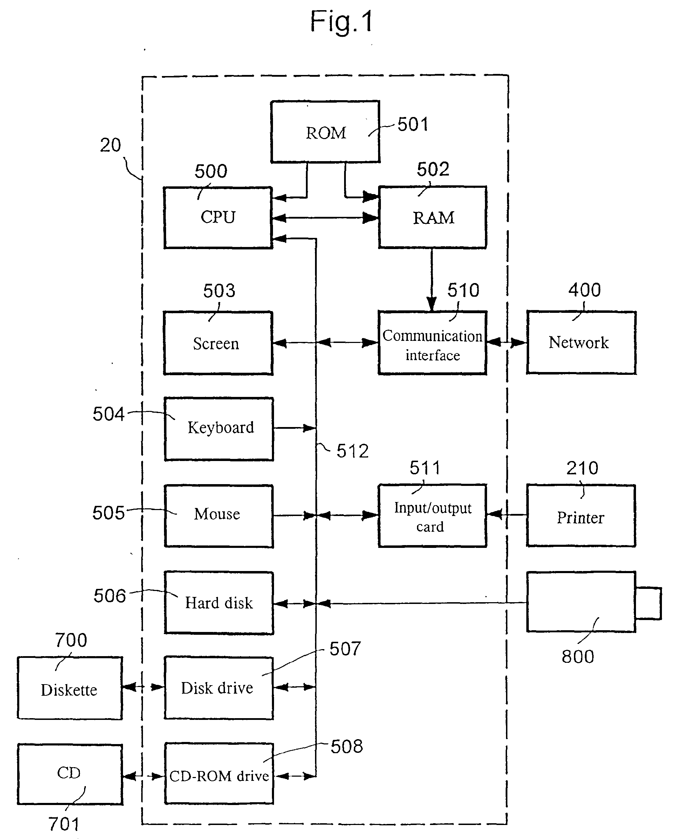

Figure 1 depicts a computer 20 connected to different peripherals, including notably a printer 210. The computer has a communication interface 510 connected to a communication network 400 by means of which it can notably exchange information with other computers. It also has a storage means 506 known as a "hard disk", a diskette drive 507 and a CD disk drive 508. These drives can respectively receive a diskette 700 and a CD disk 701. These elements, as well as the hard disk 506, can contain documents within the meaning of the invention, as well as the code for implementing the invention which, once read by the computer 20, will be stored in the hard disk 506. According to a variant, the program enabling the computer to implement the invention can be stored in a read only memory 501 (designated as ROM in Figure 1). According to another possible variant, the program can be loaded on request from the network 400 in order to be stored in an identical fashion to that described above.

The computer is supplemented by a screen 503 for displaying the documents to be printed, and serving as an interface with the user who wishes to modify these documents, using a keyboard 504 and/or a "mouse" 505 or any other control means. The screen 503 also makes it possible, at the request of the user, to display the volumes of the different printing products which will be liable to be consumed by the printer 210 if a document available in the form of digital information in the computer or one of its peripherals is to be printed. The instructions relating to the implementation of the method according to the invention are executed by a central unit 500 (CPU in Figure 1). The instructions are stored in the read only memory 501 or in the other available information storage elements. On powering up, the programs relating notably to the implementation of the invention, stored in one of the non-volatile memories, such as for example the read only memory 501, are transferred into a random access memory 502 (RAM in Figure 1), which then contains the executable code of the invention as well as the variables and parameters necessary for its implementation.

The different sub-elements of the computer 20 which have just been mentioned exchange information with each other by means of a communication bus 512, which also, by virtue of the interface 510, routes information coming from the network 400 or transmits information to this network. If it is the case of any reproduction of images, a digital camera 800 can be connected to the bus 512.

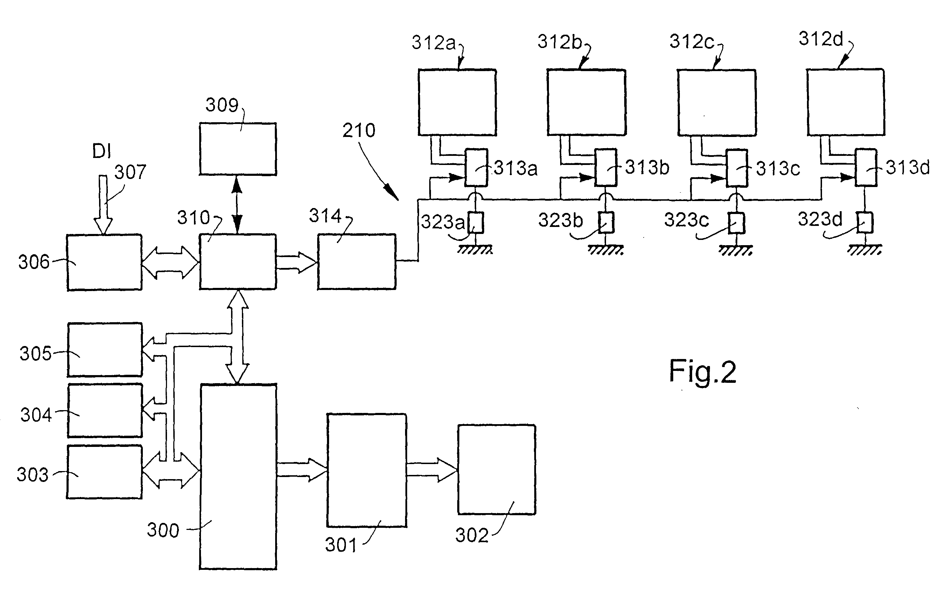

Considering more particularly Figure 2, a printer 210 is depicted, which is here a colour printer receiving data to be printed DI representing a complex document composed, for example, of a text and an image. The data DI are introduced by means of a parallel input/output port 307, connected to the input/output card 511 of the computer 20 and connected to an interface circuit 306, itself connected to an ink ejection control circuit 310 which controls print heads 313$\underline{a}$, 313$\underline{b}$, 313$\underline{c}$, 313$\underline{d}$ via an amplification circuit 314. The print heads are respectively connected to printing product reservoirs 312$\underline{a}$, 312$\underline{b}$, 312$\underline{c}$, 312d. According to the example, each reservoir is connected by a pipe to the corresponding print head 313$\underline{a}$-313$\underline{d}$, which is electrically connected to earth by means of a resistor 323$\underline{a}$-323$\underline{d}$ of low value. The reservoir 312$\underline{a}$ contains a black printing product for monochrome or four-colour printing. The reservoirs 312$\underline{b}$, 312$\underline{c}$, 312$\underline{d}$ contain printing products of different colours, for colour printing. The three colours are conventionally magenta, cyan and yellow.

In the example, the reservoirs 312$\underline{a}$-312$\underline{d}$ and the print heads 313$\underline{a}$-313$\underline{d}$, are mounted on a carriage caused to move along guidance means formed by parallel rods and rails. The carriage is moved in reciprocating motion along these guidance means. It is driven by a motor 302, by means of a belt mechanism, well known to the skilled man. This motor can be controlled in order to drive the carriage, and therefore the print heads, at several different speeds (according to the printing conditions) $V_0$, $V_1$, or $V_2$, as will be seen later. The path of movement of the carriage and therefore of the print heads 313$\underline{a}$-313$\underline{d}$ is parallel to a line to be printed on a print medium such as a sheet of paper. This print medium is moved perpendicularly to the path of movement of the carriage by the mechanism of the printer, known per se.

The printer also has a main data processing circuit 300 associated with a read only memory 303 and a random access memory 309. The read only memory 303 contains the operating programs of the main processing circuit whilst the random access memory 309, also associated with the printing product ejection control circuit 310, temporarily stores the data received by means of the interface 306 and the data produced by the main processing circuit 300. The latter is connected to a display 304 on which it controls the display of messages indicating the functioning of the printer in general. This information can of course be transmitted to the computer in order to be displayed on the screen 503.

The main processing circuit 300 is connected to a keyboard 305 by means of which the user can transmit operating commands to the printer. The processing circuit also controls the motor 302 which drives the carriage, by means of an amplification circuit 301. This motor is here advantageously of the stepping type. According to the frequency of its control pulses, the motor can move at different speeds $V_0$, $V_1$, $V_2$.

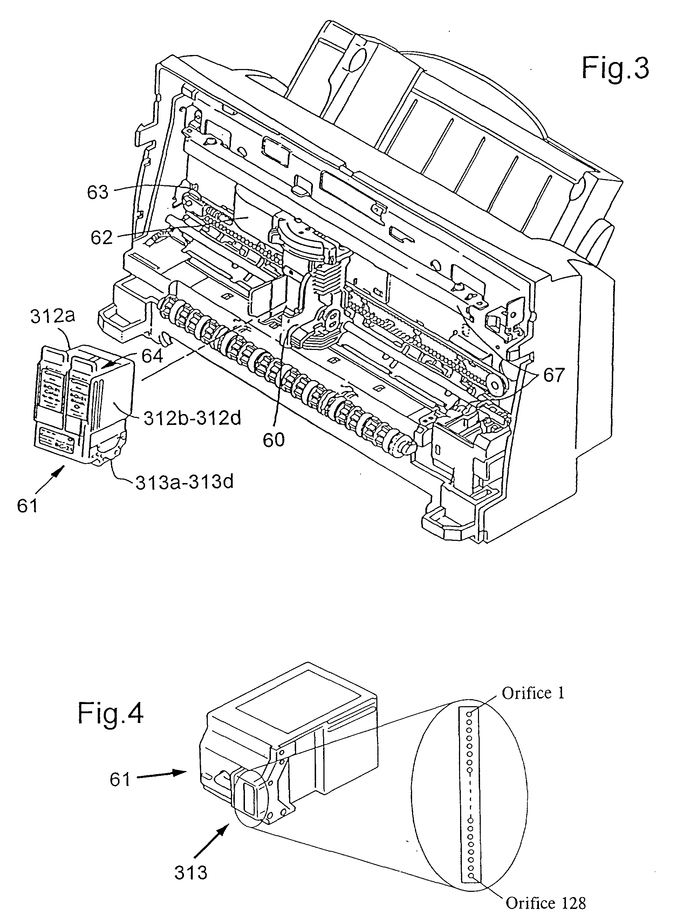

Figure 3 depicts the structure of a conventional colour printer, of the inkjet type. A carriage 60 can be seen, adapted to receive a print unit 61, the lower part of which includes print heads 313a-313d with several channels for printing several lines of pixels at a time, and the upper part of which forms a receptacle for the printing product reservoirs. In the example, there can be seen the black printing product reservoir 312a and a cartridge 64 internally compartmentalised in order to form the set of reservoirs 312b-312d.

The unit 61, once placed on the carriage 60, is driven in a reciprocating movement along a movement path formed by guidance rails 67. The motor 302, not visible in Figure 3, drives the carriage 60 by means of a belt device 63. The movement path of the print heads is parallel to a line on a print medium, not shown, such as a sheet of paper. A flat strand of electric cables 62 establishes the connection between the print heads and the remainder of the electronic circuits described with reference to Figure 2.

In a conventional manner, each print head has several nozzles, placed one above the other, and perpendicularly to the direction of advancement of the head, as depicted in Figure 4. Each nozzle corresponds to an aforementioned channel. For a 720 x 720 dpi inkjet printer, the spacing between the nozzles, or vertical pitch, is $1/720^{th}$ of an inch. This configuration makes it possible to simultaneously eject several droplets of printing product of the same colour when the head 313 is moved, and therefore to increase the printing speed, since it is possible to print several pixels at a time. However, the number of nozzles per head is limited. For example, it is at most 128 for an inkjet printer. The number of pixels which can be printed simultaneously with this type of printer is therefore at best limited to 128.

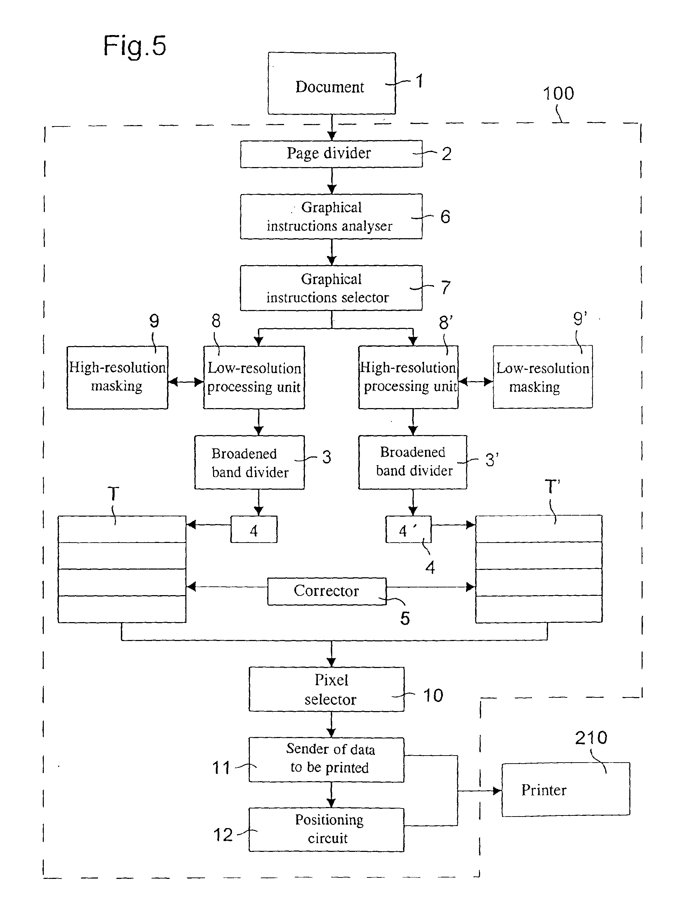

Figure 5 depicts a functional block diagram of a device 100 able to implement the process of generating the data necessary for printing a document provided that it is functionally interposed between a file 1 containing this document in the form of digital information and a printer 210 able to print these data. With the above operating system, this digital information is of the "draw a line", "draw an ellipse" or "draw a bitmap image" type, for example. They result from the conversion of an original document to be printed by a print processor (not shown), also responsible for controlling a print driver (not shown). Thus, where the device is included in the computer 20, it will preferably be integrated into the print driver in charge of the printer 210. The device can also be produced in the form of an autonomous unit housed in the printer itself or forming part of an interface circuit.

The device has a page divider 2 responsible for dividing the electronic document, stored in the file 1 in the form of graphical instructions, into groups of information, each group representing a page. Each page includes a more or less large part of the document according to the format chosen for reproduction, the size of the sheets of paper, etc.

The information representing each page is then transmitted to a graphical instruction analyser 6, which determines whether each of these items of information belongs to a first or second category, these categories corresponding respectively to a low resolution or to a high resolution. In the example, the graphical instruction analyser takes into account both the type of graphical instruction and its dimensions in order to determine whether it is associated with the first or second category. This procedure for analysing the graphical instructions will be described in detail below.

The graphical instructions thus analysed are transmitted by a graphical instruction selector 7 to two processing units 8, 8' whose function is respectively to transmit all the graphical instructions representing the page in question whilst modifying them to adapt them to a low-resolution reproduction mode and to a high-resolution reproduction mode. Thus the low-resolution processing unit 8 is associated with means 9 of masking the graphical instructions in the second category whilst the high-resolution processing unit 8' is associated with means 9' of masking the graphical instructions in the first category. In other words, all the graphical instructions are transmitted by the low-resolution processing unit 8 but those which have been classified in the second category (or high resolution) are masked, that is to say rewritten so as to appear colourless.

In the same way, all the graphical instructions representing the page are transmitted by the high-resolution processing unit 8' but those which were classified in the first category are modified by the low-resolution masking means 9' in order to appear colourless.

The graphical instructions transmitted by the processing unit 8 are then divided into broadened bands by a broadened band divider 3, whilst the graphical instructions transmitted by the high-resolution processing unit 8' are divided into broadened bands by a broadened band divider 3'. It will be recalled that such a broadened band consists of digital information representing a band of the page in question plus a margin of overlap belonging to the following band and making it possible to make corrections after rasterisation.

The broadened band graphical instructions processed by the divider 3 are transmitted to a "rasteriser" 4 and the graphical information processed by the broadened band divider 3' is transmitted to a "rasteriser" 4'. The "rasteriser" 4 converts the digital information reaching it into an array T (low resolution) whilst the "rasteriser" 4' converts the digital information reaching it into an array T' (high resolution). Each array T and T' describes part of a monochromatic component of the document, each cell in the array representing a pixel. The array T contains all the pixels of the elements to be reproduced in low resolution whilst the array T' contains all the pixels of the elements to be reproduced in high resolution. Each cell in an array, which is a memory, contains the coordinates of a pixel and an item of information representing the fact that this pixel is "switched on" or not. A switched-on pixel will give rise to a printing of a dot of the colour in question.

In the example, the part of the monochromatic component is that which corresponds to the broadened band currently being processed. If the document to be printed is in black and white, the "rasterisers" 4 and 4' fill only two arrays, one for each resolution. If it is in colour, the "rasterisers" 4 and 4' generate as many arrays, for each resolution, as there are monochromatic components necessary for representing the document.

The arrays T and T' are then modified under the action of a corrector 5 able to apply to them a correction entailing modifications to the switched-on pixels and making it possible to improve the quality of the document to be printed. The corrector 5 uses known algorithms. This use requires the taking into account of the pixels in the excess part of the band in question (this is why broadened band is spoken of). When the corrector has applied such algorithms in order to modify the switched-on pixels in the two arrays T and T', these are read and transmitted to the printer 210 by the transmitter of data to be printed 11. It should be noted that reading takes place without taking account of the non-useful pixels in each array, that is to say the pixels situated in the margin of overlap with the following band.

Thus the selector 10 first of all reads the pixels in a first group of rows in the array T, for example the first 64 rows when the printer comprises a single monochrome print head with 128 nozzles. The selector next sends these rows to the printer for low resolution printing. It will be recalled that, in this mode requiring only one pass, only one nozzle out of two is used. In addition it is possible, for this print mode, to use a relative high speed $V_1$ of movement of the print head.

Then the selector 10 reads a second group of rows, but this time in the array T', and divides them into as many subsets as there are passes to be effected in high-resolution mode. In the example, two passes are sufficient. These two subsets are sent in this order to the printer 210 for printing in high-resolution mode. These two passes are performed by simple sweeping of the print head from left to right, and then from right to left, without advancement of the paper.

It may also be desirable to reduce the speed of movement of the head to a value $V_2 < V_1$ when printing in high-resolution mode, in order to increase the time separating the depositing of two adjacent drops of ink (pixels).

In this case, it is important to note that the slowness of the high-resolution print mode results from two factors: a speed of movement of the print head which is lower than in low resolution and the need to effect the printing in several passes (at least one outward and return journey) whilst using only some of the nozzles each time.

The selector 10 then reiterates these alternating readings of the arrays T, T' with movement of the paper perpendicular to the path of the print head and until the rows in the arrays T and T' are exhausted. Then it renews these operations until all these bands of all the pages in the document have been printed. This operating method saves appreciable time in reproduction since only the high-definition elements are printed in this slow mode.

The selector 10 and transmitter 11 also control a circuit 12 for positioning the print head of the printer 210 which makes it possible to move said print head at a speed $V_0$ at least equal and preferably appreciably greater than $V_1$ provided that the reading of one of the arrays T or T' on a group of rows in question corresponding to the number of nozzles reveals a high number of consecutive switched-off pixels.

In other words, if, when one of the arrays T or T' is read, it proves that, on all the lines to which the movement of the head relates, several consecutive pixels are switched off (for example if a number of consecutive switched-off pixels greater than a predetermined value are observed), the transmitter 11 can be arranged to control the positioning circuit 12, which controls the movement of the print head at the speed $V_0$ so that it positions itself as rapidly as possible at the edge of the closest area to be printed.

Thus, by an appropriate management of these possible speeds of movement of the print head:

$$V_0 \geq V_1 > V_2$$

it is possible to minimise the time necessary for the printing of a document in which some parts are reproduced in low resolution and others will be reproduced in high resolution.

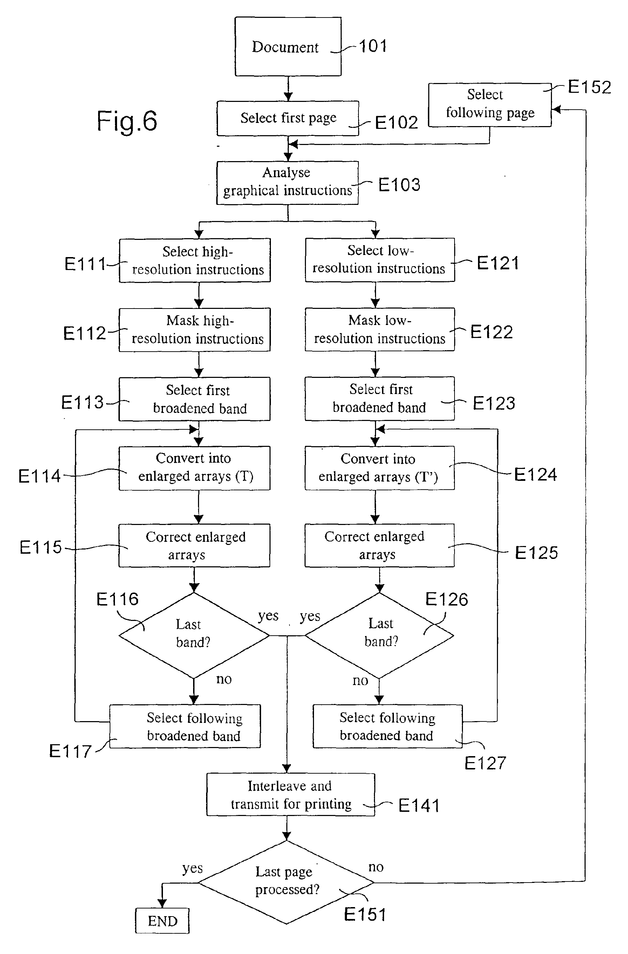

Figure 6 is a flow diagram describing more precisely the steps performed during the implementation of the process of processing the computer document, for example by means of the computer of Figure 1 connected to its printer 210 or to a printer accessible through the network 400 via another computer. The starting point is a file 101 in which the document to be printed is stored in the form of graphical instructions.

Step E102 selects a first page in the digital information contained in the file 101.

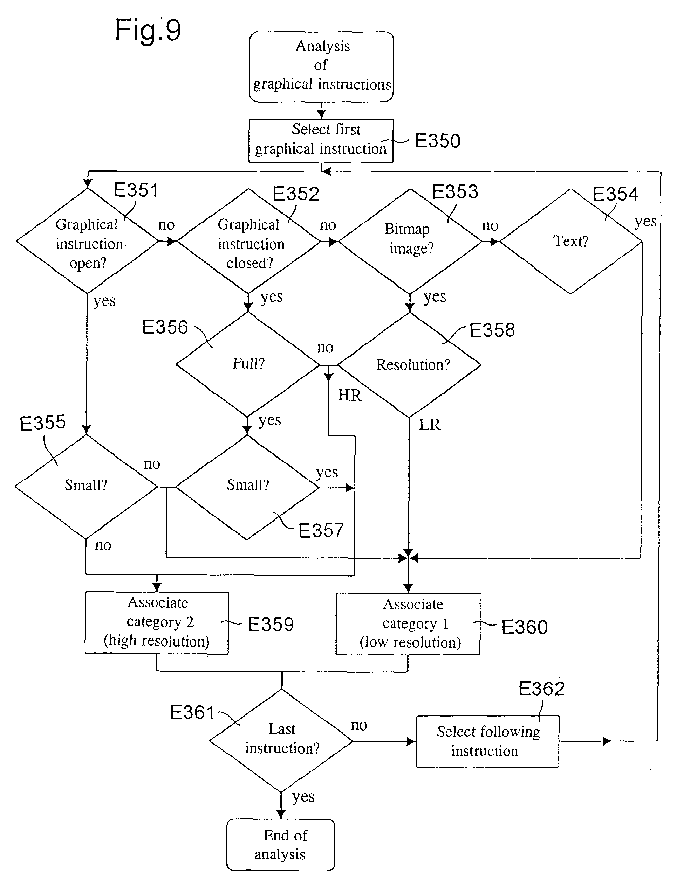

Step E103 analyses the graphical instructions of the page currently being processed, that is to say associates, with each graphical instruction, the category which corresponds to it. This makes it possible to distinguish the graphical instructions in two groups, those which will be printed in low-resolution mode and those which will be printed in high-resolution mode. According to a particularly advantageous embodiment of the invention, the first group will comprise: open graphical functions, of the curve, straight line, arc etc type; closed graphical functions, of the circle, rectangle, polygon etc type; and text functions. The second group comprises notably image representations in bitmap mode. The detail of this analysis will be explained with reference to Figure 9.

The flow diagram then separates into two parallel branches. The branch E111-E114 generates a low-resolution array T, whilst the branch E121-E124 generates a high-resolution array T'.

Step E111 selects or marks the graphical instructions chosen by the analysis step as having to be printed in high-resolution mode.

Step E112 "colours" these instructions in white in order to make them invisible, whilst masking any low-resolution information which they might cover. This is because it often happens that a graphical instruction, for example an ellipse, is partially masked by another graphical instruction, for example an image. It is not possible merely to purely and simply remove the image, since the masked part of the ellipse would reappear on printing. On the contrary, the image is replaced with a solid rectangle of the same size and white in colour, that is to say of the same colour as the paper used, so that the ellipse continues to be masked (and then partly covered by the rectangle), without the image being printed (since it is the same colour as the paper).

Step E113 selects the graphical information corresponding to a first broadened band of the page in question.

Step E114 (rasterisation) fills the enlarged array or arrays T corresponding respectively to the monochromatic component or components of the broadened band currently being processed.

Step E115 applies one or more correction algorithms to the enlarged array or arrays T of said broadened band.

In parallel to step E111, step E121 selects the graphical instructions chosen by the analysis step as having to be printed in low-resolution mode.

Step E122 "colours" these instructions in white in order to make them invisible, whilst masking any high-resolution information which they might cover.

Step E123 selects a first broadened band of the page in question.

Step E124 (rasterisation) fills the enlarged array or arrays T' corresponding respectively to the monochromatic component or components of the broadened band currently being processed.

Step E125 applies one or more correction algorithms to the enlarged arrays T' of said broadened band.

Steps E116 or E126 are tests in which it is checked whether the band which has just been "rasterised" is the last. If the response is no, the following broadened band (E117 or E127) is selected and step E114 or E124 respectively is returned to. If the response is yes, step E141 is passed to.

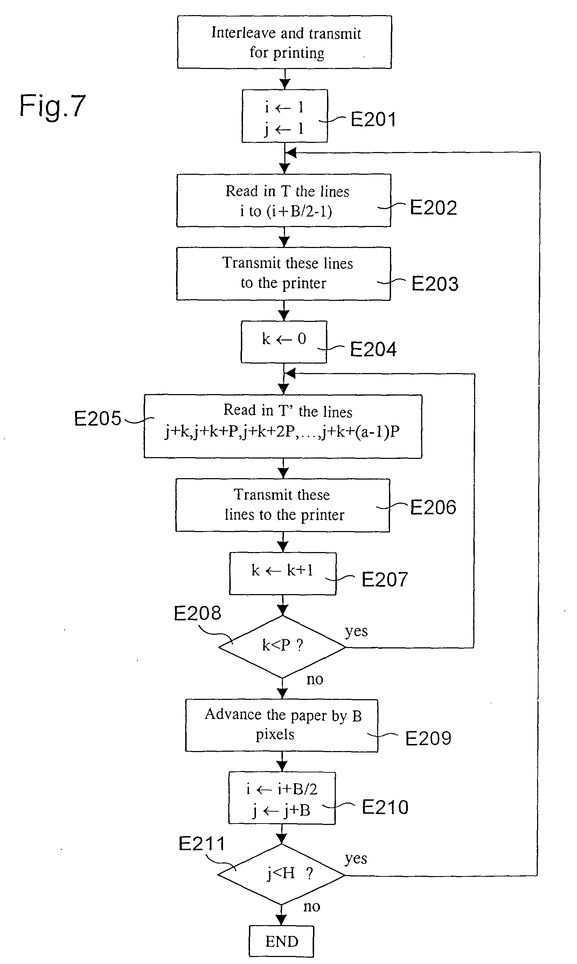

Step E141 combines or interleaves the data contained in the arrays T and T' and transmits them to the printer 210. This step is more particularly detailed in Figure 7.

It is checked in a step E151 whether all the pages of the document have been processed. If yes the process ends. Otherwise the following page is selected, at a selection step E152, and the previous steps E103 to E151 are reiterated.

Thus a document can be printed both more rapidly than in a conventional high-resolution mode, and more correctly than in a conventional low-resolution mode.

The printing proper is carried out as described below with reference to Figure 7. In the description of this figure, B represents the number of nozzles, P the number of passes in high-resolution mode, $\underline{a}$ is the ratio B/P, and H the total number of lines contained in the array T' (it is assumed hereinafter that H is a multiple of B). In the example, B is equal to 128, P is equal to 2, $\underline{a}$ is equal to 64 and H is equal to 2560.

Step E201 consists of initialising the value of the variables i and j to 1. These variables will make it possible to run through the arrays T and T' in groups of B/2 and B rows respectively.

At step E202, rows i to i+B/2-1 are read in the array T, that is to say B/2 rows.

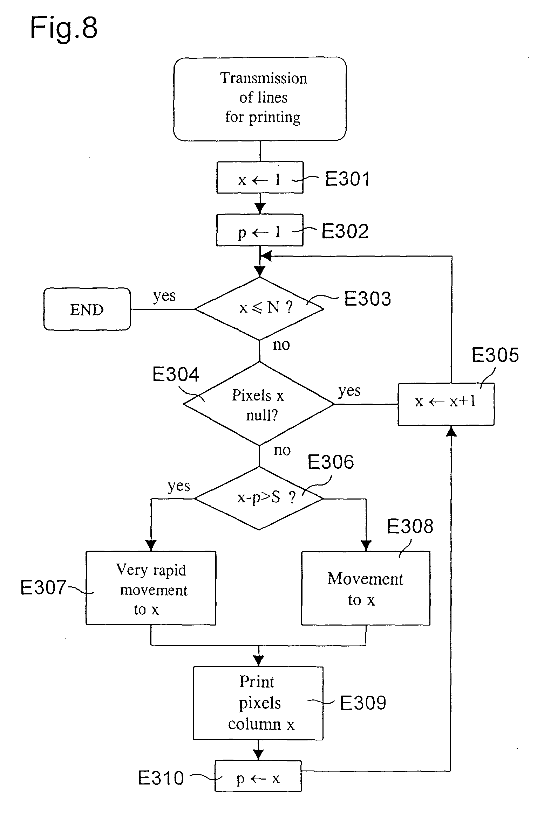

At step E203 these rows are transmitted to the printer for printing in low-resolution mode. It will be recalled that, in this mode, only one nozzle out of two is used. At the end of this step, B/2 rows have been printed, occupying a height of B pixels. The transmission of the rows for printing at a print speed $V_1$ corresponding to low-resolution mode takes place according to the flow diagram in Figure 8 with analysis of the pixels in the array T by column to enable the print head to be positioned rapidly (speed $V_0$) at the boundary of an area to be printed in low resolution.

At step E204 the variable k is initialised to 0. This variable is used to control the number of passes in high-resolution mode.

At step E205 the rows j+k, j+k+P, j+k+2P, ..., j+k+(a-1)P are read, that is to say B/P lines.

At step E206 these rows are transmitted to the printer for printing in high-resolution mode. The transmission of the rows for printing at the print speed $V_2$ corresponding to high-resolution mode takes place according to the flow diagram in Figure 8 with analysis of the pixels in the array T' by column to make it possible to position the print head rapidly (speed $V_0$) at the boundary of an area to be printed in high-resolution mode.

At step E207 the variable k is incremented by 1.

A test step E208 checks whether k is strictly less than P, that is to say whether there still remains at least one pass to be made.

In the affirmative, steps E205 to E208 are reiterated.

In the negative, the paper is advanced (at step E209) "upwards" by B pixels (or, which is equivalent, the head is moved "downwards" by B pixels).

Step E210 consists of incrementing the variables i and j by respectively B/2 and B. This makes it possible, in the remainder of the algorithm, to process the remaining rows.

At step E211 it is checked whether j < H, that is to say whether there are still rows to be printed. If the response is yes, step E202 is returned to. If the response is no, the printing of the information contained in the arrays T and T' is terminated.

Figure 8 explains steps E203 or E206 of the flow diagram of Figure 7, during which the information (pixels switched on or not switched on) for the rows able to be printed in a single pass, according to low-resolution mode or according to high-resolution mode, is transmitted. According to the flow diagram in Figure 8, this information is transmitted to the print head conjointly with signals controlling the movement of the print head for a rapid positioning thereof (at speed $V_0$) when the reading of the rows in the array T or T' able to be printed in a single pass reveals that a certain number of adjacent columns, less than a predetermined number S, contains no switched-on pixel. The number S is chosen, for example, at 50 or 100 considering that, if the number of consecutive columns containing no switched-on pixel is less than this value, it is not necessary to modify the speed of movement of the print head, since this can remain equal to the print speed $V_1$ or $V_2$ according to the print mode selected.

In this flow diagram:

- x is the number of the column in question, limited to 64 or 128 pixels (corresponding to the number of nozzles on the print head),
- p is the number of the last non-zero column, that is to say including at least one switched-on pixel,
- N is the number of pixels in a row.

At steps E301 and E302, the variables x and p are initialised to 1.

Step E303 is a test at which it is determined whether x is less than or equal to N. If the response is yes, the process in Figure 7 is terminated and step E204 or step E207 (Figure 7) is returned to respectively. If the response is no, step E304 is passed to.

Step E304 is a test at which it is checked whether all the pixels in the part of column x in question are zero (no pixel switched on in the corresponding part of the array T or T').

If the response is yes, step E305 is passed to, at which the value of x is incremented by one unit and step E303 is returned to.

If the response is no, step E306 is passed to, which is a test at which it is checked whether the value x - p is larger than S.

If the response is yes, this means that it is necessary to actuate the movement of the print head at speed $V_0$ as far as the first column comprising at least one switched-on pixel. The movement of the print head is then actuated, at the positioning speed $V_0$, as far as the column x. Step E309 is next passed to, which consists of printing all the switched-on pixels in column x (the column being limited, obviously, to the number of nozzles on the print head).

If the response at step E306 is negative, step E308 is passed to, which consists of moving the print head as far as column x without changing the speed, that is to say at speed $V_1$ if low-resolution print mode is used or at speed $V_2$ if high-resolution print mode is used. Step E309 is next passed to.

After printing of the column x at step E309, step E310 is passed to, at which the value of p is modified by entering the value x therein, and step E305 is passed to.

Figure 9 illustrates the process of analysing the graphical instructions as executed, for example, at step E103 in Figure 6. It will be recalled that, at such a stage, the document or a part of this document is fully described by a succession of graphical instructions which it is necessary to classify in one or other of two categories, category 1 corresponding to a low-resolution representation or reproduction mode and category 2 corresponding to a high-resolution representation or reproduction mode.

Step E350 consists of selecting the first graphical instruction.

At step E351, it is checked whether the graphical instruction in question is an open graphical function, typically a curve, straight line, broken line, etc.

If the response is no, step E352 is passed to, which consists of checking whether the graphical instruction is a closed graphical function such as a circle, ellipse, polygon etc.

If the response is no, step E353 is passed to, which consists of checking whether the graphical instruction corresponds to the representation of an image in bitmap mode.

If the response is no, step E354 is passed to, at which it is checked that the graphical instruction corresponds to the representation of printing characters (texts).

If step E354 determines that the graphical instruction does indeed represent a text, step E360 is passed to, at which the corresponding graphical instruction is classified in the first category, for low-resolution printing or representation.

If the response at test E351 is positive, test E355 is passed to, at which it is determined whether the open graphical function in question is small or not.

If the response is yes, step E359 is passed to, at which the graphical instruction in question is classified in category 2 for a representation or printing in high-resolution mode.

If the response at test E355 is negative, step E360 is passed to and the graphical instruction is classified in category 1.

If the response at test E352 is positive, test E356 is passed to, consisting of determining whether or not the closed graphical function in question is solid. In other words, it is determined whether the closed graphical function is a closed contour or a surface, for example a surface of given colour. If the response at test E356 is negative, step E359 is passed to and the graphical instruction is classified in category 2.

On the other hand, if the response at test E356 is positive, test E357 is passed to, which determines whether the solid graphical function is small or large.

If the graphical function is small, step E359 (category 2) is passed to. If the graphical function is large, step E360 (category 1) is passed to.

If the response at test E353 is positive, test E358 is passed to, which consists of determining which is the resolution of the image part represented in bitmap mode which corresponds to this graphical instruction. If this image part is of high resolution, step E359 is passed to, at which category 2 is associated with it. On the other hand, if the resolution of this image part is low, step E360 is passed to, at which category 1 is associated with it.

When the graphical instruction in question has been classified in category 1 or 2 (E360 or E359), step E361 is passed to, at which it is determined whether the graphical instruction is the last in the series. If such is the case, the operations described in the flow diagram in Figure 6 are continued.

If such is not the case, step E362 is passed to, at which the following graphical instruction is selected, and step E351 is returned to.

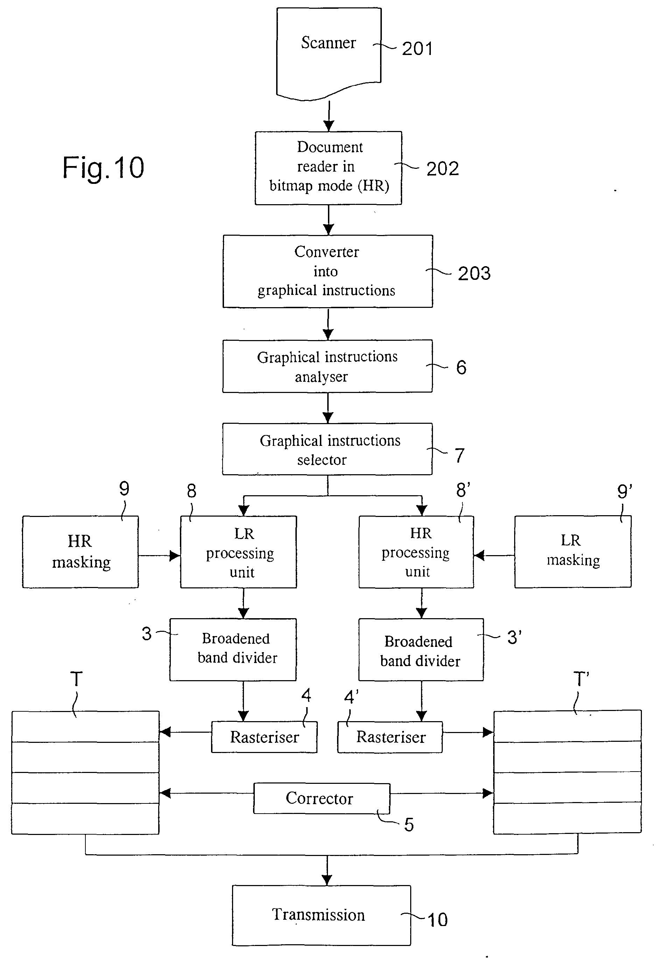

Figure 10 is a block diagram which describes the implementation of the invention in a document scanning device.

A scanner 201 is able to deliver a representation of a document in bitmap mode. Reading pixel by pixel corresponds to a so-called high-resolution mode. The reader 202 therefore supplies, in high resolution, a bitmap representation of the document. This information is processed by a converter 203, which transcribes them into graphical instructions. The algorithms used by this converter are known. The succession of graphical instructions is then sent to a processing unit similar to the one described with reference to Figure 5 and comprising a graphical instruction analyser 6, a graphical instruction selector 8, a low-resolution processing unit 7, a high-resolution processing unit 7', masking means 9 and 9', a broadened band divider 3, a broadened band divider 3', two "rasterisers" 4 and 4' supplying the arrays T and T' and a corrector 5. Next, the digital data contained in the arrays T and T' can be used according to the requirements of the user, and notably they can be printed or transmitted. It is also possible to transmit the information in the form of modified graphical instructions, as available at the outputs of the processing units 7 and 7'.

Naturally, the invention also relates to any device (that is to say any appliance or set of appliances connected to each other) having means for implementing the method described above. These means have been described here with reference to Figures 1 to 5 and 10. In this case, such a device can consist of at least one computer and a printer, possibly a scanner, or even two computers connected in a network with at least one printer and/or one scanner.

The invention covers any storage means such as a magnetic tape, a CD-ROM (fixed-memory compact disc) or rewriteable compact disc, integrated or not into the device, possibly removable, provided that it contains a program at least partially implementing the method described. Such a storage means can be read by a computer or a microprocessor for implementation of the method.

**Claims**

1. Method of processing a document available in the form of a set of digital data in first and second categories, **characterised in that** it consists of producing a first series of digital data (8, 9) from data in the said set by masking the digital data in the second category, producing a second series of digital data (8', 9') from data in the said set by masking the digital data in the first category and using (210) at least one of these two series.

2. Method according to Claim 1, **characterised in that** it includes a prior step of analysis (6) of said set of digital data in order to classify them in said first or second category.

3. Method according to Claim 1 or 2, **characterised in that** said digital data represent graphical instructions.

4. Method according to Claims 2 and 3 together, **characterised in that** said analysis step includes the search for open graphical functions (E351), closed graphical functions (E352), functions representing text (E354) and functions representing an image in bitmap mode (E353), and **in that** it also consists of classifying at least one of said text functions in said first category and functions representing images in bitmap mode in said second category.

**5.** Method according to Claim 4, **characterised in that** said closed and open graphical functions are classified in one or other category according to the dimensions (E355, 357) of the figures which they represent in said document.

**6.** Method according to one of Claims 1 to 5, **characterised in that** information corresponding to a low-resolution mode (E360) is grouped together in the first series.

**7.** Method according to one of Claims 1 to 6, **characterised in that** information corresponding to a high-resolution mode (E359) is grouped together in the second series.

**8.** Method according to one of Claims 3 to 7, **characterised in that** an operation of masking a graphical instruction in one or other series (8, 9 - 8', 9') consists of rewriting this graphical instruction by modifying at least one colorimetric parameter thereof so as to allocate a colourless representation to said graphical instruction.

**9.** Method according to one of Claims 3 to 8, **characterised in that** the aforementioned use consists of printing the graphical instructions in the first series in low-resolution mode and/or printing the graphical instructions in the second series in high-resolution mode.

**10.** Method according to Claim 9, **characterised in that** there are created, from the graphical instructions in the two categories, two arrays (T, T') describing respectively at least the same part of a monochromatic component of said document, each cell in an array representing a pixel, a pixel being said to be "switched on" when a printing is provided for at the location designated by the corresponding cell, **in that** one (T) of the arrays produced from the graphical instructions in the first series contains the switched-on pixels to be reproduced in low resolution and the other array (T'), produced from the graphical instructions in the second series, contains the switched-on pixels to be reproduced in high-resolution, and **in that** it also consists of reproducing a line in the document by means of the same print head using the information in the two arrays relating to the same line.

**11.** Method according to Claim 10, **characterised in that**, in order to print such a line, a relative moment is caused between the said head and a printing medium at two different speeds, a high speed ($V_1$) when the pixels to be reproduced are read in the low-resolution array and a low speed ($V_2$) when the pixels to be reproduced are read in the high-resolution array.

**12.** Method according to Claim 11, **characterised in that** it comprises a step consisting of simultaneously printing a group of adjacent lines in low resolution at said high speed ($V_1$) using a print head with several channels (Figure 4), without relative movement, of the so-called "column" type, perpendicularly to the direction of printing of a line, between said head and said printing medium, using one channel out of two in said print head.

**13.** Method according to Claim 11 or 12, **characterised in that** it comprises the operations consisting of reading a sub-group of lines (E205) which are not adjacent in the high-resolution array (T'), spaced apart by a constant number of lines corresponding to a predetermined number of passes in high resolution, simultaneously printing this subgroup in high resolution at said low speed using the corresponding channels of said print head and renewing these operations without relative movement, of the so-called "column" type, between said head and said printing medium perpendicularly to the direction of printing of a line, each time selecting another subgroup until all the channels have been used.

**14.** Method according to Claims 12 and 13 together, **characterised in that** an aforementioned column relative movement by a value equal to the number of channels in the print head is caused and **in that** the low-resolution and high-resolution printing operations are renewed.

**15.** Method according to Claim 14, **characterised in that** the said low-resolution and high-resolution printing operations are continued until all the information contained in the two arrays has been used.

**16.** Method according to one of Claims 10 to 15, **characterised in that** two aforementioned arrays (T, T') are created, with limited capacity less than the capacity necessary for describing said monochromatic component of said document in low resolution and high resolution, respectively, and **in that** groups of pixels of said monochromatic component representing adjacent bands of said document are entered successively (E117, E127) in these arrays.

**17.** Method according to Claim 16, **characterised in that** said document is divided into broadened bands (E113, E123) overlapping, and **in that**, from corresponding digital data, two enlarged arrays (T, T') are created, allowing a reprocessing of images entailing a modification of the switched-on pixels, **in that** each array is modified, by applying a known correction algorithm and **in that** the printing of the switched-on pixels corresponding to the excess part of each array is excluded.

**18.** Method according to one of Claims 10 to 17, **characterised in that** each array is filled by one category from all the graphical instructions describing part of the document but after having modified those which belong to the other category in order to give them a neutral or colourless printing.

**19.** Method according to one of Claims 3 to 18, **characterised in that** the aforementioned operations are preceded by at least one operation (202) of scanning a document and a conversion (203) of this scanning into a succession of aforementioned graphical instructions.

**20.** Method according to Claim 19, **characterised in that** a single scanning operation (202) is performed in high-resolution mode.

**21.** Device for processing a document available in the form of a set of digital data in first and second categories, **characterised in that** it comprises first means (8, 9) for producing, from said set of data, a first series of digital data, including means for masking in said set the digital data in the second category and second means (8', 9') for producing, from said set of data, a second series of digital data, including means for masking in said set the digital data in the first category, and means for using (210) at least one of these two series.

**22.** Device according to Claim 21, **characterised in that** it has means (8) of analysing said set of digital data, in order to classify said data in said first or second category.

**23.** Device according to Claim 22 or 23, **characterised in that** said first means (8, 9) are arranged in order to group together in said first category information corresponding to a low-resolution mode.

**24.** Device according to one of Claims 21 to 23, **characterised in that** said second means (8', 9') are arranged in order to group together in said second category information corresponding to a high-resolution mode.

**25.** Device according to one of Claims 21 to 24, **characterised in that**, said digital data being available in the form of graphical instructions, said means for masking graphical instructions in one or other category include means for rewriting such a graphical instruction by modifying at least one colorimetric parameter thereof, so as to give it a colourless or neutral representation.

**26.** Device according to one of Claims 21 to 26, **characterised in that** it has low-resolution printing means (T, 210) controlled from graphical instructions in the first series and high-resolution printing means (T', 210) controlled from graphical instructions in the second series.

**27.** Device according to Claim 26, **characterised in that** the low-resolution printing means and the high-resolution printing means include means for creating, from said digital data, two arrays (T, T') describing respectively at least the same part of a monochromatic component of said document, each cell in an array representing a pixel, a pixel being said to be "switched on" when a printing is provided at the location designated by the corresponding cell, **in that** one of the arrays (T), produced from the graphical instructions in said first series, contains the switched-on pixels to be reproduced in low resolution and the other array (T'), produced from the graphical instructions in the second series, contains the switched-on pixels to be reproduced in high resolution, and **in that** it also has means for reproducing a line in the document by means of the same print head (313) using the information in the two arrays relating to said line.

**28.** Device according to Claim 27, **characterised in that** it has means (302) for causing a relative line movement between said head and a printing medium, at two different speeds, a high speed ($V_1$) when the pixels to be reproduced are read in the low-resolution array and a low speed ($V_2$) when the pixels to be reproduced are read in the high-resolution array.

**29.** Device according to one of Claims 26 to 28, **characterised in that** it comprises a print head with several channels (Figure 4), in order to print a group of adjacent lines without relative movement, of the so-called "column" type, perpendicularly to the direction of printing of a line between said head and said printing medium, and **in that** it has means for selecting one channel out of two in said print head, in low-resolution printing mode.

**30.** Device according to Claim 29, **characterised in that** it comprises means for reading a subgroup of non-adjacent lines in the high-resolution array (E202), spaced apart by a constant number of lines corresponding to a predetermined number of passes in high resolution, means for simultaneously printing this subgroup in high resolution at said low speed ($V_2$) using the corresponding channels in said print head, means for renewing these operations without relative movement, of the so-called "column" type, between said head and said printing medium, perpendicularly to the direction of printing of a line, and means for selecting, each time, another sub-group until all the channels have been used.

**31.** Device according to one of Claims 27 to 30, **characterised in that** the aforementioned two arrays (T, T') being of limited capacity less than the capacity necessary for describing said monochromatic component of said document in low resolution and high resolution, respectively, it has means for successively entering (E117, E127) in these arrays groups of pixels of said monochromatic component representing adjacent bands of said document.

**32.** Device according to Claim 31, **characterised in that** it has means for dividing said document into overlapping broadened bands, means for creating, from corresponding digital data, two enlarged arrays (T, T') allowing a reprocessing of images entailing a modification of the switched-on pixels, each array being modified by applying a known correction algorithm and means for excluding the printing of the switched-on pixels corresponding to the excess part of each array.

**33.** Device according to one of Claims 21 to 25, **characterised in that** it is associated with means of scanning (202) a document, equipped with means of converting said scanning into a succession of graphical instructions.

**34.** Method according to Claim 33, **characterised in that** the scanning means are of the high-resolution type.

**35.** Device according to one of Claims 21 to 34, **characterised in that** it includes a computer and a printer.

**36.** Device according to one of Claims 21 to 34, **characterised in that** it includes a computer and a scanning device.

# Fig.1

ROM — 501

500

CPU

502

RAM

503

Screen

510

Communication interface

400

Network

504

Keyboard

512

505

Mouse

511

Input/output card

210

Printer

506

Hard disk

800

700

Diskette

507

Disk drive

508

701

CD

CD-ROM drive

20

14

Fig.2

Fig.3

63

62

312a

64

312b-312d

60

313a-313d

61

67

Fig.4

61

313

Orifice 1

Orifice 128

## Fig.5

```
                        ┌──────────────┐
                        │   Document   │——— 1
                        └──────────────┘
                               │
            ┌──────────────────┼──────────────────────────────┐
            │                  ▼                               │
            │          ┌──────────────┐                 100    │
            │          │ Page divider │——— 2                   │
            │          └──────────────┘                        │
            │                  │                                │
            │                  ▼                                │
            │          ┌──────────────┐                        │
            │          │   Graphical  │                        │
            │          │ instructions │——— 6                   │
            │          │   analyser   │                        │
            │          └──────────────┘                        │
            │                  │                                │
            │                  ▼                                │
            │          ┌──────────────┐                        │
            │          │   Graphical  │                        │
            │          │ instructions │——— 7                   │
            │          │   selector   │                        │
            │          └──────────────┘                        │
            │         9    8   │           8'        9'         │
```

| High-resolution masking | Low-resolution processing unit | | High-resolution processing unit | Low-resolution masking |

```
            │                  │                    │           │
            │                  ▼                    ▼           │
            │          ┌──────────────┐     ┌──────────────┐    │
            │          │  Broadened   │     │  Broadened   │    │
            │          │ band divider │—3   │ band divider │—3' │
            │          └──────────────┘     └──────────────┘    │
            │    T             │                    │      T'    │
            │ ┌──────────┐     ▼              ▼  ┌──────────┐    │
            │ │          │◄──┌───┐        ┌────┐►│          │    │
            │ │          │   │ 4 │        │ 4' │ │          │    │
            │ ├──────────┤   └───┘        └────┘ ├──────────┤    │
            │ │          │                   4   │          │    │
            │ ├──────────┤  ┌──────────────┐     ├──────────┤    │
            │ │          │◄►│  Corrector   │◄────►│         │    │
            │ ├──────────┤  └──────────────┘     ├──────────┤    │
            │ │          │        5              │          │    │
            │ └────┬─────┘                       └─────┬────┘    │
            │      └──────────────┬────────────────────┘        │
            │                     ▼                             │
            │             ┌──────────────┐                      │
            │             │    Pixel     │                      │
            │             │   selector   │——— 10                │
            │             └──────────────┘          ┌ ─ ─ ─ ─ ─ ┤
            │                     │                  │   210     │
            │                     ▼                  │           │
            │             ┌──────────────┐           │           │
            │       11 ———│ Sender of data│─────────┐│           │
            │             │ to be printed │         ││ ┌───────┐ │
            │             └──────────────┘         │└►│Printer│ │
            │                     │                 │  └───────┘ │
            │                     ▼                 │  │         │
            │             ┌──────────────┐          │            │
            │       12 ———│ Positioning  │──────────┘            │
            │             │   circuit    │            │          │
            │             └──────────────┘                       │
            └──────────────────────────────────────┘ ─ ─ ─ ─ ─ ┘
```

17

Fig.6

```
                        ┌──────────────┐
                        │   Document   │─── 101
                        └──────────────┘
                                │                      ┌──────────────┐
                                ▼                      │    Select    │─── E152
                        ┌──────────────┐               │following page│
                        │Select first page│─── E102     └──────────────┘
                        └──────────────┘                       │
                                │                              │
                                ▼                              │
                        ┌──────────────┐
                        │   Analyse    │─── E103
                        │graphical instructions│
                        └──────────────┘
                        ┌──────┴──────┐
                        ▼             ▼
          ┌─────────────────┐   ┌─────────────────┐
   E111───│  Select high-   │   │   Select low-   │─── E121
          │resolution instructions│ │resolution instructions│
          └─────────────────┘   └─────────────────┘
                    │                     │
                    ▼                     ▼
          ┌─────────────────┐   ┌─────────────────┐
   E112───│   Mask high-    │   │    Mask low-    │─── E122
          │resolution instructions│ │resolution instructions│
          └─────────────────┘   └─────────────────┘
                    │                     │
                    ▼                     ▼
          ┌─────────────────┐   ┌─────────────────┐
   E113───│  Select first   │   │  Select first   │─── E123
          │ broadened band  │   │ broadened band  │
          └─────────────────┘   └─────────────────┘
                    │                     │
                    ▼                     ▼
          ┌─────────────────┐   ┌─────────────────┐
   E114───│  Convert into   │   │  Convert into   │─── E124
          │enlarged arrays (T)│  │enlarged arrays (T')│
          └─────────────────┘   └─────────────────┘
                    │                     │
                    ▼                     ▼
          ┌─────────────────┐   ┌─────────────────┐
   E115───│ Correct enlarged│   │ Correct enlarged│─── E125
          │     arrays      │   │     arrays      │
          └─────────────────┘   └─────────────────┘
                    │                     │
     E116           ▼      yes   yes      ▼          E126
          ◇ Last band? ◇─────────────◇ Last band? ◇
                    │ no                  │ no
                    ▼                     ▼
          ┌─────────────────┐   ┌─────────────────┐
          │ Select following│   │ Select following│
          │ broadened band  │   │ broadened band  │
          └─────────────────┘   └─────────────────┘
   E117                                   E127
                            │
                            ▼
                  ┌──────────────────┐
                  │   Interleave and │─── E141
                  │transmit for printing│
                  └──────────────────┘
                            │
              yes           ▼           no
          ◇────────◇ Last page processed? ◇────────
          ▼
     ┌───────┐                         E151
     │  END  │
     └───────┘
```

**Fig.7**

```
┌─────────────────────────┐
│  Interleave and transmit │
│     for printing         │
└─────────────────────────┘
            │
            ▼
      ┌──────────┐
      │  i ← 1   │ ─── E201
      │  j ← 1   │
      └──────────┘
            │
            ▼
   ┌──────────────────┐
   │ Read in T the lines │ ─── E202
   │   i to (i+B/2-1)   │
   └──────────────────┘
            │
            ▼
   ┌──────────────────┐
   │ Transmit these lines │ ─── E203
   │   to the printer    │
   └──────────────────┘
            │
            ▼
      ┌──────────┐
      │  k ← 0   │ ─── E204
      └──────────┘
            │
            ▼
E205 ─── ┌────────────────────────────┐
         │   Read in T' the lines       │
         │ j+k,j+k+P,j+k+2P,…,j+k+(a-1)P │
         └────────────────────────────┘
            │
            ▼
   ┌──────────────────┐
   │  Transmit these    │ ─── E206
   │ lines to the printer │
   └──────────────────┘
            │
            ▼
      ┌──────────┐
      │ k ← k+1  │ ─── E207
      └──────────┘
            │
E208        ▼
   ◇──────────────◇ ── yes
   │    k<P ?     │
   ◇──────────────◇
            │ no
            ▼
   ┌──────────────────┐
   │ Advance the paper by B │ ─── E209
   │     pixels        │
   └──────────────────┘
            │
            ▼
      ┌──────────┐
      │ i ← i+B/2 │ ─── E210
      │ j ← j+B  │
      └──────────┘
            │
E211        ▼
   ◇──────────────◇ ── yes
   │    j<H ?     │
   ◇──────────────◇
            │ no
            ▼
      ┌──────────┐
      │   END    │
      └──────────┘
```

# Fig.8

```
                    ┌─────────────────┐
                    │  Transmission   │
                    │    of lines     │
                    │   for printing  │
                    └─────────────────┘
                             │
                    ┌─────────────┐
                    │   x ← 1     │── E301
                    └─────────────┘
                             │
                    ┌─────────────┐
                    │   p ← 1     │── E302
                    └─────────────┘
                             │
         ┌───────┐  yes      ◇
         │  END  │───────  x ≤ N ?  ── E303
         └───────┘           ◇
                             │ no
                             │
    E304 ─── ◇
          Pixels x      yes   ┌──────────┐
           null?      ───────│ x ← x+1  │── E305
             ◇               └──────────┘
             │ no
             │         E306
             ◇
   yes    x-p>S  ?
  ──────     ◇
             │ no
 ┌──────────┐          ┌──────────┐ ── E308
 │ Very rapid│         │ Movement │
 │ movement  │ E307    │   to x   │
 │   to x    │         └──────────┘
 └──────────┘
             │
       ┌──────────┐
       │  Print   │
       │  pixels  │── E309
       │ column x │
       └──────────┘
             │
  E310 ──┌──────────┐
         │  p ← x   │
         └──────────┘
```

## Fig.9

```
                    ┌──────────────────┐
                    │     Analysis     │
                    │        of        │
                    │ graphical instructions │
                    └──────────────────┘
                             │
                    ┌──────────────────┐
                    │   Select first   │      E350
                    │ graphical instruction │
                    └──────────────────┘
```

E351 — Graphical instruction open? — no → E352 — Graphical instruction closed? — no → E353 — Bitmap image? — no → E354 — Text? — yes

E351 Graphical instruction open? — yes → E355 Small?

E352 Graphical instruction closed? — yes → E356 Full?

E353 Bitmap image? — yes → E358 Resolution?

E356 Full? — no → HR

E356 Full? — yes → E357 Small? — yes

E357 Small? — no

E355 Small? — no

E355 Small? — no

E358 Resolution? — LR

E359 Associate category 2 (high resolution)

E360 Associate category 1 (low resolution)

E361 Last instruction? — no → E362 Select following instruction

E361 Last instruction? — yes → End of analysis

**Fig.10**

**European Patent Office**

## EUROPEAN SEARCH REPORT

Application Number

EP 01 40 0762

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 971 309 A (HEWLETT PACKARD CO) 12 January 2000 (2000-01-12) <br><br> * column 15, line 41 - column 18, line 21; figures 3-9 * <br> * abstract * | 1-3,6,7, 19, 21-24, 33,35,36 | G06K15/02 |
| A | US 5 822 510 A (NAKAMURA KAZUO ET AL) 13 October 1998 (1998-10-13) <br><br> * column 2, line 52 - column 3, line 17 * <br> * column 4, line 28 - column 5, line 32 * <br> * column 9, line 33 - column 11, line 4; figures * | 1-9, 19-25, 33-36 | |
| A | WO 99 19830 A (PIXO ARTS CORP) 22 April 1999 (1999-04-22) | | |
| A | EP 0 886 235 A (HEWLETT PACKARD CO) 23 December 1998 (1998-12-23) | | **TECHNICAL FIELDS SEARCHED (Int.Cl.7)** |
| A | EP 0 969 656 A (XEROX CORP) 5 January 2000 (2000-01-05) | | G06K |

The present search report has been drawn up for all claims

| Place of search | Date of completion of the search | Examiner |
|---|---|---|
| THE HAGUE | 20 July 2001 | Gélébart, Y |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                               

& : member of the same patent family, corresponding document

EPO FORM 1503 03.82 (P04C01)

EP 1 139 276 A1

**ANNEX TO THE EUROPEAN SEARCH REPORT
ON EUROPEAN PATENT APPLICATION NO.**  EP 01 40 0762

This annex lists the patent family members relating to the patent documents cited in the above-mentioned European search report.
The members are as contained in the European Patent Office EDP file on
The European Patent Office is in no way liable for these particulars which are merely given for the purpose of information.

20-07-2001

| Patent document cited in search report | | Publication date | Patent family member(s) | | Publication date |
|---|---|---|---|---|---|
| EP 0971309 | A | 12-01-2000 | US | 5731823 A | 24-03-1998 |
| | | | DE | 69515923 D | 04-05-2000 |
| | | | DE | 69515923 T | 21-12-2000 |
| | | | EP | 0674289 A | 27-09-1995 |
| | | | JP | 7232463 A | 05-09-1995 |
| | | | US | 6257693 B | 10-07-2001 |
| US 5822510 | A | 13-10-1998 | EP | 0772118 A | 07-05-1997 |
| | | | JP | 9167063 A | 24-06-1997 |
| WO 9919830 | A | 22-04-1999 | NONE | | |
| EP 0886235 | A | 23-12-1998 | US | 5999710 A | 07-12-1999 |
| | | | JP | 11165435 A | 22-06-1999 |
| EP 0969656 | A | 05-01-2000 | JP | 2000059230 A | 25-02-2000 |

EPO FORM P0459

For more details about this annex : see Official Journal of the European Patent Office, No. 12/82